(19) Europäisches Patentamt
European Patent Office
Office européen des brevets

(11) EP 2 743 727 B1

(12) **EUROPEAN PATENT SPECIFICATION**

(45) Date of publication and mention of the grant of the patent:
**06.01.2016 Bulletin 2016/01**

(51) Int Cl.:
***G01S 13/90*** *(2006.01)* ***G01S 13/34*** *(2006.01)*

(21) Application number: **14162893.3**

(22) Date of filing: **31.03.2014**

(54) **Method for implementing high-resolution wide-swath spaceborne SAR system**

Verfahren zur Implementierung eines High Resolution Wide Swath SAR (HRWS) -Systems

Procédé pour mettre en oeuvre un système RSO spatial à large fauchée et haute résolution (HRWS)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2014 CN 201410020544**

(43) Date of publication of application:
**18.06.2014 Bulletin 2014/25**

(73) Proprietor: **Institute of Electronics, Chinese Academy of Sciences**
**Beijing 100190 (CN)**

(72) Inventors:
- **Deng, Yunkai**
  **100190 Beijing (CN)**
- **Luo, Xiulian**
  **100190 Haidian District Beijing (CN)**
- **Wang, Yu**
  **100190 Beijing (CN)**
- **Zhang, Zhimin**
  **100190 Beijing (CN)**
- **Zhao, Fengjun**
  **100190 Beijing (CN)**
- **Guo, Lei**
  **100190 Beijing (CN)**
- **Wang, Wei**
  **100190 Beijing (CN)**
- **Wang, Chunle**
  **100190 Beijing (CN)**

(74) Representative: **Gulde & Partner**
**Patent- und Rechtsanwaltskanzlei mbB**
**Wallstraße 58/59**
**10179 Berlin (DE)**

(56) References cited:
- **GERHARD KRIEGER ET AL: "Multidimensional Waveform Encoding: A New Digital Beamforming Technique for Synthetic Aperture Radar Remote Sensing", IEEE TRANSACTIONS ON GEOSCIENCE AND REMOTE SENSING, IEEE SERVICE CENTER, PISCATAWAY, NJ, US, vol. 46, no. 1, 1 January 2008 (2008-01-01), pages 31-46, XP011198512, ISSN: 0196-2892, DOI: 10.1109/TGRS.2007.905974**
- **WEI XU ET AL: "Multichannel synthetic aperture radar systems with a planar antenna for future spaceborne microwave remote sensing", IEEE AEROSPACE AND ELECTRONIC SYSTEMS MAGAZINE, IEEE SERVICE CENTER, PISCATAWAY, NJ, US, vol. 27, no. 12, 1 December 2012 (2012-12-01), pages 26-30, XP011484282, ISSN: 0885-8985, DOI: 10.1109/MAES. 2012.6397660**
- **KRIEGER GERHARD: "MIMO-SAR: Opportunities and Pitfalls", IEEE TRANSACTIONS ON GEOSCIENCE AND REMOTE SENSING, IEEE SERVICE CENTER, PISCATAWAY, NJ, US, vol. 52, no. 5, 28 June 2013 (2013-06-28), pages 2628-2645, XP011541489, ISSN: 0196-2892, DOI: 10.1109/TGRS. 2013.2263934 [retrieved on 2014-02-27]**
- **W XU ET AL: "MULTI-CHANNEL SPCMB-TOPS SAR FOR HIGH- RESOLUTION WIDE-SWATH IMAGING", PROGRESS IN ELECTROMAGNETICS RESEARCH, vol. 116, 30 May 2011 (2011-05-30), pages 533-551, XP055131197, ISSN: 1070-4698**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- YAN LIU ET AL: "Echo Model Analyses and Imaging Algorithm for High-Resolution SAR on High-Speed Platform", IEEE TRANSACTIONS ON GEOSCIENCE AND REMOTE SENSING, vol. 50, no. 3, 1 March 2012 (2012-03-01), pages 933-950, XP055131219, ISSN: 0196-2892, DOI: 10.1109/TGRS.2011.2162243
- WEI XU ET AL: "Processing of Multichannel Sliding Spotlight and TOPS Synthetic Aperture Radar Data", IEEE TRANSACTIONS ON GEOSCIENCE AND REMOTE SENSING, IEEE SERVICE CENTER, PISCATAWAY, NJ, US, vol. 51, no. 8, 1 August 2013 (2013-08-01) , pages 4417-4429, XP011521745, ISSN: 0196-2892, DOI: 10.1109/TGRS.2013.2265306

## Description

### TECHNICAL FIELD

The disclosure relates to a new high-resolution wide-swath spaceborne Synthetic Aperture Radar (SAR) system, and in particular to a spaceborne SAR system with a Multi-Input Multi-Output (MIMO) sliding spotlight mode in azimuth and with sub-band synthesis in range.

### BACKGROUND

A major challenge in a spaceborne SAR is how to improve a resolution and a swath width at the same time. In a traditional strip-map mode, there is an inherent contradiction between an azimuth resolution and a range swath width. a spotlight SAR can improve the azimuth resolution, but an azimuth swath width is restricted by an antenna beam width; a TopsSAR and a ScanSAR can increase the range swath width, but at the cost of reducing the azimuth resolution.

Currently, a common method for solving this inherent contradiction is a multi-channel technique with azimuth Single-Input Multi-Output (SIMO), which reduces a system Pulse Recurrence Frequency (PRF) with additional azimuth sampling. An azimuth high resolution and a range wide swath can be achieved simultaneously by combining the multi-channel technique and a spotlight mode. A tradeoff between the strip-map mode and the spotlight mode is a sliding spotlight mode, by which an azimuth swath width and azimuth resolution obtained are between those by the strip-map mode and the spotlight mode. Therefore, a newest high-resolution wide-swath mode currently proposed is a multi-channel sliding spotlight mode. However, due to hardware restriction to a bandwidth of a single transmitted chirp signal, a supper-high range resolution cannot be achieved by such a multi-channel sliding spotlight mode.

In short, further research on a high-resolution wide-swath spaceborne SAR is of great importance.

Gerhard Krieger et al. ("Multidimensional Waveform Encoding: A New Digital Beamforming Technique for Synthetic Aperture Radar Remote Sensing", IEEE Transactions on Geoscience and Remote Sensing, Vol. 46, no. 1, 1 January 2008, pages 31-46, XP011198512, ISSN: 0196-2892, DOI: 10.1109/TGRS.2007.905974) introduces the innovative concept of multidimensional waveform encoding for spaceborne synthetic aperture radar (SAR). The combination of this technique with digital beamforming on receive enables a new generation of SAR systems with improved performance and flexible imaging capabilities. Examples are high-resolution wide-swath radar imaging with compact antennas, enhanced sensitivity for applications like alongtrack interferometry and moving object indication, and the implementation of hybrid SAR imaging modes that are well suited to satisfy hitherto incompatible user requirements. Implementation-specific issues are discussed and performance examples demonstrate the potential of the new technique for different remote sensing applications.

Wei Xu et al. ("Multichannel synthetic aperture radar systems with a planar antenna for future spaceborne microwave remote sensing", IEEE Aerospace and Electronic Systems Magazine, Vol. 27, no. 12, 1 December 2012, pages 26-30, XP011484282, ISSN: 0885-8985, DOI: 10.1109/MAES.2012.6397660) teaches that multichannel SAR systems with a planar antenna will be widely adopted in the next generation spaceborne microwave remote sensing missions to achieve the imaging capacity. However, the high data rate, the increased system complexity, the difficulty of multichannel signal processing, the heavy load, and the wide bandwidth downlink may hamper the demonstration of these imaging modes. With the rapid development of electronic engineering and digital signal processing, these problems will be well resolved. Furthermore, regarding the implementation complexity, multichannel SAR systems with a deployable reflector antenna seem to be a better alternative for HRWS imaging [17, 18]. However, the major drawback of the reflector antenna is the limited beam-steering capacity compared with a planar antenna, which will affect some of the remote sensing applications. Thus, multichannel SAR systems with a planar antennarather than a reflector are more suitable for the higher geometric resolution, especially for the higher-carrier frequency (such as X-band).

Gerhard Krieger ("MIMO-SAR: Opportunities and Pitfalls", IEEE Transactions on Geoscience and Remote Sensing, Vol. 52, no. 5, 28 June 2013, pages 2628-2645, XP011541489, ISSN: 0196-2892, DOI: 10.1109/TGRS.2013.2263934) reviews advanced radar architectures that employ multiple transmit and multiple receive antennas to improve the performance of future synthetic aperture radar (SAR) systems. These advanced architectures have been dubbed multiple-input multiple-output SAR (MIMO-SAR) in analogy to MIMO communication systems. Considerable confusion arose, however, with regard to the selection of suitable waveforms for the simultaneous transmission via multiple channels. It is shown that the mere use of orthogonal waveforms is insufficient for the desired performance improvement in view of most SAR applications. As a solution to this fundamental MIMO-SAR challenge, a new class of short-term shift-orthogonal waveforms is introduced. The short-term shift orthogonality avoids mutual interferences from the radar echoes of closely spaced scatterers, while interferences from more distant scatterers are suppressed by digital beamforming on receive in elevation. Further insights can be gained by considering the data acquisition of a side-looking imaging radar in a 3-D information cube. It becomes evident that the suggested waveforms fill different subspaces that can be individually accessed by a multichannel receiver. For completeness, the new class of short-term shift-orthogonal waveforms is also compared to a recently proposed pair of orthogonal frequency-division multiplexing waveforms. It is shown that both sets of waveforms require essentially the same principle of range time to elevation angle conversion via a multichannel receiver in order to be applicable for MIMO-SAR imaging without interference.

Wei Xu et al. ("MULTI-CHANNEL SPCMB-TOPS SAR FOR HIGH-RESOLUTION WIDE-SWATH IMAGING", Progress in Electromagnetic Research, Vol. 116, 30 May 2011, pages 533-551, XP055131197, ISSN: 1070-4698) proposes a new multi-channel single phase center multiple beam (SPCMB) TOPS mode for high-resolution wide-swath (HRWS) imaging to improve the impaired azimuth resolution of the novel Terrain Observation by Progressive Scans (TOPS) mode. However, the progressive azimuth beam scanning leads to the Doppler spectrum aliasing and both beam center time and Doppler centroid varying with the target's azimuth location. Challenges may arise for processing the SPCMB-TOPS SAR data from these problems. In this paper, an efficient full aperture imaging approach is proposed to process the raw data. The sketch of the proposed imaging approach is described in detail. Simulation results of point targets validate the proposed imaging approach.

Yan Liu et al. ("Echo Model Analyses and Imaging Algorithm for High-Resolution SAR on High-Speed Platform", IEEE Transactions on Geoscience and Remote Sensing, Vol. 50, no. 3, 1 March 2012, pages 933-950, XP055131219, ISSN: 0196-2892, DOI: 10.1109/TGRS.2011.2162243) presents an accurate echo model according to the geometric configuration of the SAR working process. By comparing the "stop-go" echo (which denotes the echo based on the "stop-go" approximation in this paper) with the accurate echo, the error brought by the "stop-go" approximation is introduced, and the intolerable error is shown in a reference system. A spotlight imaging algorithm based on the accurate echo is given and is well supported by the simulation results.

## SUMMARY

In view of this, it is desired that embodiments of the disclosure provide a method for implementing a high-resolution wide-swath SAR system.

A technical solution of the disclosure is implemented as follows.

An embodiment of the disclosure provides a method for implementing a high-resolution wide-swath spaceborne Synthetic Aperture Radar (SAR) system, including steps of: adopting, in azimuth of a spaceborne SAR, a Multi-Input Multi-Output (MIMO) sliding spotlight mode for transmitting, by N sub-apertures, N chirp signals of different carrier frequencies, such that sub-band echoes received by the multiple sub-apertures are separated; and preprocessing, in azimuth, the separated sub-band echoes to resolve the back-folded Doppler spectrum caused by beam steering and a multi-channel structure of an antenna; performing range sub-band synthesis on azimuth preprocessed signals to obtain a synthesized signal with a bandwidth of N times of a bandwidth of a single transmitted chirp signal; and performing, using a Range-Migration Algorithm (RMA), residual focusing of the synthesized signal to obtain a final radar image with a high resolution. The step of performing, using an RMA, residual focusing of the synthesized signal comprises steps of: transforming a synthesized wideband signal to a two-dimensional frequency domain; multiplying, in the two-dimension frequency domain, the synthesized wideband signal by a reference function to obtain a roughly-focused radar signal; and performing a STOLT mapping on the roughly-focused radar signal to obtain the final radar image. And the reference function $H_{RFM}(f_\tau,f_\eta)$ in the RMA is expressed as:

$$H_{RFM}\left(f_\tau,f_\eta\right)=\exp\left(j\frac{4\pi R_{ref}\left(f_c+f_\tau\right)}{c}\sqrt{1-\frac{c^2 f_\eta^{\,2}}{4v_s^2\left(f_c+f_\tau\right)^2}}\right)\cdot\exp\left\{\frac{j\pi R_s f_\eta^2 c}{2v_s^2\left(f_c+f_\tau\right)}\right\},$$

wherein $f_\tau$ is a range frequency, $f_\eta$ is an azimuth frequency, $R_{ref}$ is a nearest slant range between the centre of the imaging scene and the antenna, $f_c$ is a central carrier frequency, $c$ is the speed of light, $v_s$ is a velocity of a platform, $j$ is an imaginary unit, $\pi$ is a ratio of the circumference of a circle to its diameter, $R_s$ is a nearest slant range between the antenna and a centre of rotation, and the second exponential term is for compensating an additional phase introduced by azimuth bulk compression, which is not included in a reference function in the strip-map mode.

The disclosure provides a method for implementing a new high-resolution wide-swath spaceborne SAR system: an MIMO sliding spotlight mode is adopted in azimuth, and different sub-apertures transmit chirp signals of different carrier frequencies, so as to improve an azimuth resolution, an azimuth swath width and a range swath width simultaneously; each transmitting sub-aperture transmits a chirp signal with a stepped frequency, such that received echoes can be well separated; sub-band synthesis is adopted in range to achieve an ultra-high range resolution; when imaging processing is performed on a radar echo received in this system, multi-channel reconstruction and sub-band synthesis are embedded into a two-step imaging algorithm to obtain an imaging algorithm for this new SAR system. The beneficial effect thereof is as follows.

(1) A range swath width obtained by such an MIMO sliding spotlight SAR transmitting chirp signals with stepped frequencies is *N* times of a range swath width of a traditional Single-Input Single-Output (SISO) sliding spotlight SAR, and an azimuth resolution and range resolution obtained by such an MIMO sliding spotlight SAR are 1/*N* of those of the traditional SISO sliding spotlight SAR;

(2) A frequency step between different carrier frequencies of the chirp signals equals a sub-band bandwidth, thereby avoiding sub-band interference and enabling continuous spectra of a synthesized signal; and

(3) during azimuth preprocessing, a deramped Doppler bandwidth can be minimized using the range-frequency-dependent deramping function disclosed herein, such that the required system PRF is minimized, and therefore the widest range swath width can be achieved.

## BRIEF DESCRIPTION OF THE DRAWINGS

Fig. 1 is a schematic diagram of a flow of a method for implementing a high-resolution wide-swath spaceborne SAR system according to the disclosure;

Fig. 2a is an imaging geometry of a new high-resolution wide-swath spaceborne SAR system according to the disclosure;

Fig. 2b is a timeline of pulse-tramsmitting and echo-receiving by a new high-resolution wide-swath spaceborne SAR system according to the disclosure;

Fig. 3 is a block diagram of an imaging process by a new high-resolution wide-swath spaceborne SAR system according to the disclosure;

Fig. 4 is an imaging scene designed in an embodiment;

Fig. 5 is a real part of an echo of a sub-band 1 received by a sub-aperture 1 in an embodiment;

Fig. 6 is a Doppler spectrum of the sub-band 1 received by the sub-aperture 1 in an embodiment;

Fig. 7 is a Doppler spectrum of the sub-band 1 after azimuth preprocessing in an embodiment;

Fig. 8a is a two-dimensional spectrum of the sub-band 1 after azimuth preprocessing in an embodiment;

Fig. 8b is a two-dimensional spectrum after bandwidth synthesis in an embodiment;

Fig. 9a is a contour plot of the impulse response function of a point target P1;

Fig. 9b is a contour plot of the impulse response function of a point target P2; and

Fig. 9c is a contour plot of the impulse response function of a point target P3.

## DETAILED DESCRIPTION

To show a technical solution and advantages of the disclosure more clearly, the disclosure is elaborated below with reference to embodiments and drawings.
Fig.1 is a flowchart of a method for implementing the new high-resolution wide-swath spaceborne SAR system, the method including steps as follows.

S1: adopted in azimuth of a spaceborne SAR is a Multi-Input Multi-Output (MIMO) sliding spotlight mode for transmitting, by *N* sub-apertures, *N* chirp signals of different carrier frequencies, such that sub-band echoes received by the multiple sub-apertures are separated; and the separated sub-band echoes are preprocessed in azimuth to resolve the back-folded Doppler spectrum caused by beam steering and a multi-channel structure of an antenna.
S2: range sub-band synthesis is performed on azimuth preprocessed signals to obtain a synthesized signal with a bandwidth of N times of a bandwidth of a single transmitted chirp signal.

S3: residual focusing of the synthesized signal is performed using a Range-Migration Algorithm (RMA) to obtain a final radar image with a high resolution.

Fig. 2a is an imaging geometry of the high-resolution wide-swath spaceborne SAR in the disclosure, wherein the whole antenna is divided into *N* sub-apertures; in transmission, a sub-aperture *m* transmits a sub-band *m;* in receiving, each sub-aperture receives *N* sub-band echoes simultaneously; a resulting equivalent phase centre is shown as a circle in Fig. 2a, in which ① represents the equivalent phase centre of the sub-band 1, ② represents the equivalent phase centre of the sub-band 2, and ○, N represents the equivalent phase centre of the sub-band *N.* Moreover, an antenna beam always steers at a virtual centre of rotation during a data acquisition interval; a velocity of the antenna is $v_s$, the nearest slant range between the antenna and the centre of rotation is $R_s$, the length of each sub-aperture is $l_{az}$, the antenna moves by a distance $X_l$ within the data acquisition interval *T,* an azimuth width of an imaging scene is $X_f$, a width of a footprint of the beam is *X*, a velocity with which the beam moves on the ground is $v_f$. This way, an azimuth resolution becomes $\alpha \cdot l_{az}/2$, compared to $l_{az}/2$ in a strip-map mode, wherein a sliding factor $\alpha$ is:

$$\alpha = \frac{R_s - R_0}{R_s} = \frac{v_f}{v_s} \tag{1}$$

, wherein $R_0$ is the nearest slant range between a point target and the centre of the antenna. In receiving, each antenna sub-aperture will receive *N* sub-band echoes simultaneously within one Pulse Recurrence Interval (PRI), as is shown in a timeline of pulse-tramsmitting and echo-receiving by a new high-resolution wide-swath spaceborne SAR system according to the disclosure in Fig. 2b.

Azimuth preprocessing of the separated sub-band echoes in step S1 may include steps as follows.

S11: range Fast Fourier Transform (FFT) is performed on the separated sub-band echoes to obtain echo data in a range-frequency and azimuth-time domain.

S12: the echo data in the range-frequency and azimuth-time domain obtained in step S11 are deramped with a deramping function to remove spectral back-folding introduced by the beam steering to obtain deramped radar data. The deramping function $h_{m,n}(i\Delta\eta, f_\tau)$ corresponding to the sub-band *n* received by a sub-aperture *m* is expressed as:

$$h_{m,n}\left(i\Delta\eta', f_\tau\right) = \exp\left\{\frac{j2\pi\left(f_m + f_\tau\right)v_s^2\left(i\Delta\eta' - \frac{\Delta x_{m,n}}{v_s}\right)^2}{cR_s}\right\} \tag{2}$$

wherein $i=-I/2,-I/2+1,...,I/2-1$, *I* being an azimuth input pixel number, $\Delta\eta$ is a pixel interval of an original signal, *j* is an imaginary unit, $\pi$ is a ratio of the circumference of a circle to its diameter, $f_m$ is a carrier frequency of a sub-band *m*, $f_\tau$ is a range frequency, *c* is the speed of light, and $\Delta x_{m,n} = \frac{(m+n-N-1)l_{az}}{2}$ is a distance between an equivalent phase centre and the centre of the antenna.

S13: the deramped radar data are transformed to a two-dimensional frequency domain via FFT.

S14: sampling data of each sub-band are reconstructed from the N sub-apertures via a multi-channel reconstruction algorithm to obtain azimuth uniform sampling data. A reconstruction matrix corresponding to the sub-band *m* is expressed as:

$$\mathbf{P}_m(f)=\mathbf{H}_m^{-1}(f)=\begin{bmatrix} H_{m,1}(f) & \cdots & H_{m,N}(f) \\ H_{m,1}(f+PRF) & \cdots & H_{m,N}(f+PRF) \\ \vdots & \ddots & \vdots \\ H_{m,1}(f+(N-1)PRF) & \cdots & H_{m,N}(f+(N-1)PRF) \end{bmatrix}^{-1} \quad (3)$$

wherein $PRF$ is a system Pulse Recurrence Frequency, an azimuth frequency $f \in [-PRF,0]$, and a characteristic filter $H_{m,n}(f)(n=1,2,...,N)$ is:

$$H_{m,n}(f)=\exp\{-j2\pi f\Delta x_{m,n}/v_s\} \quad (4)$$

, and an azimuth pixel interval after multichannel reconstruction is $\Delta\eta'/N$.

S15: the reconstructed azimuth uniform sampling data are multiplied by a residual-phase compensating function to accomplish azimuth bulk compression. The compensating function $h_{res,m}(k\Delta\eta'', f_\tau)$ is expressed as:

$$h_{res,m}(k\Delta\eta'', f_\tau)=\exp\left\{\frac{j2\pi(f_m+f_\tau)v_s^2(k\Delta\eta'')^2}{cR_s}\right\},\quad k=-J/2,...,J/2-1 \quad (5)$$

wherein $\Delta\eta''$ is an output pixel interval, $J$ is a number of output pixels.

S16: azimuth SCaling Fourier Transform (SCFT) is performed on the data after azimuth bulk compression to adjust an azimuth pixel interval $\Delta\eta''$ to a fixed interval $\Delta\eta_c''$. The azimuth pixel interval $\Delta\eta''$ after azimuth bulk compression is expressed as

$$\Delta\eta''=\frac{cR_s\cdot N}{(f_m+f_\tau)2v_s^2\cdot\Delta\eta'\cdot J} \quad (6)$$

the azimuth output pixel interval after the SCFT is:

$$\Delta\eta_c''=\frac{cR_s\cdot N}{f_c 2v_s^2\cdot\Delta\eta'\cdot J} \quad (7)$$

Step S2 of performing range sub-band synthesis includes steps as follows.

S21: range matched filtering is performed on azimuth preprocessed sub-band signals to obtain a group of range-compressed sub-band signals. A matched filter $H_r(f_\tau)$ is:

$$H_r(f_\tau)=\exp\left\{j\pi\frac{f_\tau^2}{k_r}\right\} \quad (8)$$

, wherein $f_\tau$ is the range frequency, $k_r$ is a chirp rate of a transmitted sub-band pulse.

S22: the group of range-compressed sub-band signals is zero-padded in a range-frequency domain to obtain a group of upsampled sub-band signals.

S23: IFFT is performed in range on the group of upsampled sub-band signals to obtain signals in a range time domain.
S24: frequency shift and superimposing are performed on the group of sub-band signals in the range time domain to obtain a synthesized wideband signal. A frequency-shift function $h_{s,m}(\tau)$ is:

$$h_{s,m}(\tau) = \exp\{j2\pi\Delta f_m \tau\} \tag{9}$$

, wherein $\tau$ is a range time, and a frequency shift $\Delta f_m$ of the sub-band m is:

$$\Delta f_m = \left(m - \frac{1+N}{2}\right)\Delta f,\ m = 1,...,N \tag{10}$$

, wherein $\Delta f$ is a frequency step.

Step S3 of performing residual focusing of the synthesized signal using an RMA includes steps as follows.

S31: a synthesized wideband signal is transformed to a two-dimensional frequency domain.
S32: the synthesized wideband signal is multiplied, in the two-dimension frequency domain, by a reference function to obtain a roughly-focused radar signal. The reference function $H_{RFM}(f_\tau, f_\eta)$ is expressed as:

$$H_{RFM}(f_\tau, f_\eta) = \exp\left(j\frac{4\pi R_{ref}(f_c + f_\tau)}{c}\sqrt{1 - \frac{c^2 f_\eta^{\ 2}}{4v_s^2(f_c + f_\tau)^2}}\right) \cdot \exp\left\{\frac{j\pi R_s f_\eta^2 c}{2v_s^2(f_c + f_\tau)}\right\} \tag{11}$$

, wherein $f_\eta$ is an azimuth frequency, $R_{ref}$ is the nearest slant range between the centre of the imaging scene and the antenna, the second exponential term is for compensating an additional phase introduced by azimuth bulk compression, which is not included in a reference function in the strip-map mode.
S33: a STOLT mapping is performed on the roughly-focused radar signal to obtain the final radar image.

A whole block diagram of an imaging process by the new high-resolution wide-swath spaceborne SAR system is as shown in Fig. 3.

The disclosure is further elaborated below with an embodiment.

Table 1 shows system parameters corresponding to this embodiment. A bandwidth of two transmitted sub-band signals is 600MHz, and a sampling rate of an AD sampler greater than 600MHz will suffice. If only one sub-band is transmitted, a transmitting bandwidth of 1200MHz and an AD sampling rate greater than 1200MHz are required to achieve the same resolution. A sliding factor is 0.1. Compared with the case of a strip-map mode, an azimuth resolution is increased by a factor 10. If a deramping function with a fixed chirp rate is adopted, a deramped Doppler bandwidth is 5642Hz; if a deramping function described in (5) that varies with a sub-band carrier frequency and a range frequency is adopted, the deramped Doppler bandwidth is 2600Hz, which reduces system PRF greatly. In engineering, an SAR system with a quality factor (defined as swath width divided by resolution) greater than 10 is usually defined as a high-resolution wide-swath system. In the example with system parameters in Table 1, an azimuth swath width of 11 km, a range swath width of 90km, and a resolution of 0.260m×0.117m (azimuth resolution×slant-range resolution) are achieved. It can be seen that the quality factor corresponding to the SAR system in the embodiment is about 32, proving that this system is a high-resolution wide-swath SAR system.

Table 1. system parameters

| parameter | variable | value |
|---|---|---|
| central frequency (GHz) | $f_c$ | 9.6 |
| nearest slant range to scene centre (km) | $R_0$ | 720 |
| nearest slant range to centre of rotation (km) | $R_s$ | 800 |
| velocity of radar (m/s) | $v_s$ | 7561 |

(continued)

| parameter | variable | value |
|---|---|---|
| antenna sub-aperture length (m) | $l_{az}$ | 6 |
| system PRF (Hz) | $PRF$ | 3120/2 |
| width of transmitted pulse (us) | $T_p$ | 8 |
| number of sub-bands / sub-apertures | $N$ | 2 |
| bandwidth of transmitted signal (MHz) | $B_s$ | 600 |
| sampling rate (MHz) | $F_r$ | 720 |
| azimuthal acquisition time (s) | $T$ | 20 |

Fig. 4 is an imaging scene in an embodiment;

Fig. 5 is a real part of an echo of sub-band 1 received by sub-aperture 1 in an embodiment;

Fig. 6 is a Doppler spectrum of sub-band 1 received by sub- aperture 1 in an embodiment.

Due to application of antenna scanning and multi-channel, the system PRF is much less than the whole Doppler bandwidth, and azimuth spectra overlap seriously.

Fig. 7 is the Doppler spectrum of sub-band 1 after azimuth preprocessing in an embodiment. It can be seen that the preprocessed signal does not suffer from spectra overlap, with an increased equivalent PRF of 60 KHz.

Fig. 8a and Fig.8b are two-dimensional spectra of an azimuth preprocessed signal, in which Fig. 8a is a two-dimensional spectrum of the sub-band 1, and Fig. 8b is a synthesized two-dimensional spectrum. It can be seen that a synthesized bandwidth is twice the bandwidth of a single sub-band.

Fig. 9a, Fig. 9b and Fig. 9c show final imaging results, and a result of performance analysis of a point target is shown in Table 2. It can be seen that the 3 point targets in the scene are well focused.

Table 2
performance analysis of point objects

| | range direction | | | azimuthal direction | | |
|---|---|---|---|---|---|---|
| | p1 | p2 | p3 | p1 | p2 | p3 |
| resolution (m) | 0.117 | 0.117 | 0.117 | 0.262 | 0.254 | 0.262 |
| PSLR (dB) | -13.53 | -13.26 | -13.44 | -13.20 | -13.21 | -13.17 |
| ISLR (dB) | -11.13 | -9.97 | -11.07 | -9.92 | -9.85 | -9.99 |

What described are merely embodiments of the disclosure, and are not intended to limit the protection scope of the disclosure. Any variation or replacement within the scope disclosed herein that can be devised by those skill in the art should be covered by the scope of the disclosure.

## Claims

1. A method for implementing a high-resolution wide-swath spaceborne Synthetic Aperture Radar, SAR, system, comprising steps of:

   adopting (S1), in azimuth of a spaceborne SAR, a Multi-Input Multi-Output, MIMO, sliding spotlight mode for transmitting, by N sub-apertures, N chirp signals of different carrier frequencies, such that sub-band echoes received by the multiple sub-apertures are separated; and preprocessing, in azimuth, the separated sub-band echoes to resolve the back-folded Doppler spectrum caused by beam steering and a multi-channel structure of an antenna;
   performing (S2) range sub-band synthesis on azimuth preprocessed signals to obtain a synthesized signal with a bandwidth of N times of a bandwidth of a single transmitted chirp signal; and
   performing (S3), using a Range-Migration Algorithm,RMA, residual focusing of the synthesized signal to obtain a final radar image with a high resolution
   wherein the step of performing (S3), using an RMA, residual focusing of the synthesized signal comprises steps of:

transforming a synthesized wideband signal to a two-dimensional frequency domain;
multiplying, in the two-dimension frequency domain, the synthesized wideband signal by a reference function to obtain a roughly-focused radar signal; and
performing a STOLT mapping on the roughly-focused radar signal to obtain the final radar image,

**characterized in that** the reference function $H_{RFM}(f_\tau,f_\eta)$ in the RMA is expressed as:

$$H_{RFM}\left(f_\tau,f_\eta\right)=\exp\left(j\frac{4\pi R_{ref}\left(f_c+f_\tau\right)}{c}\sqrt{1-\frac{c^2 f_\eta^{\ 2}}{4v_s^2\left(f_c+f_\tau\right)^2}}\right)\cdot\exp\left\{\frac{j\pi R_s f_\eta^2 c}{2v_s^2\left(f_c+f_\tau\right)}\right\},$$

wherein $f_\tau$ is a range frequency, $f_\eta$ is an azimuth frequency, $R_{ref}$ is a nearest slant range between the centre of the imaging scene and the antenna, $f_c$ is a central carrier frequency, $c$ is the speed of light, $v_s$ is a velocity of a platform, $j$ is an imaginary unit, $\pi$ is a ratio of the circumference of a circle to its diameter, $R_s$ is a nearest slant range between the antenna and a centre of rotation, and the second exponential term is for compensating an additional phase introduced by azimuth bulk compression, which is not included in a reference function in the strip-map mode.

**2.** The method according to claim 1, wherein a frequency step between the chirp signals of different carrier frequencies equals a sub-band bandwidth, such that the sub-band echoes received by the multiple sub-apertures are separated.

**3.** The method according to claim 1, wherein the step of preprocessing (S1), in azimuth, the separated sub-band echoes comprises steps of:

performing range Fast Fourier Transform ,FFT, on the separated sub-band echoes to obtain echo data in a range-frequency and azimuth-time domain;
deramping the obtained echo data in the range-frequency and azimuth-time domain with a deramping function to remove spectral back-folding introduced by the beam steering to obtain deramped radar data;
transforming the deramped radar data to a two-dimensional frequency domain via FFT;
reconstructing sampling data of each sub-band from the N sub-apertures via a multi-channel reconstruction algorithm to obtain azimuth uniform sampling data;
multiplying the reconstructed azimuth uniform sampling data by a residual-phase compensating function to accomplish azimuth bulk compression; and
performing azimuth SCaling Fourier Transform, SCFT, on the data after azimuth bulk compression to adjust an azimuth pixel interval $\Delta\eta''$ to a fixed interval $\Delta\eta''_c$.

**4.** The method according to claim 3, wherein the deramping function $h_{m,n}(i\Delta\eta',f_\tau)$ corresponding to a sub-band $n$ received by a sub-aperture $m$ is expressed as:

$$h_{m,n}\left(i\Delta\eta',f_\tau\right)=\exp\left\{\frac{j2\pi\left(f_m+f_\tau\right)v_s^2\left(i\Delta\eta'-\frac{\Delta x_{m,n}}{v_s}\right)^2}{cR_s}\right\}$$

wherein $i=-I/2,-I/2+1,\ldots,I/2-1$, $I$ being an azimuth input pixel number, $\Delta\eta$ is a pixel interval of an original signal, $j$ is an imaginary unit, $f_m$ is a carrier frequency of a sub-band $m$, and $\Delta x_{m,n}=\frac{\left(m+n-N-1\right)l_{az}}{2}$ is a distance between an equivalent phase centre and a centre of the antenna.

**5.** The method according to claim 3, wherein the azimuth pixel interval $\Delta\eta''$ after azimuth bulk compression is expressed

as:

$$\Delta\eta'' = \frac{cR_s \cdot N}{(f_m + f_\tau)2v_s^2 \cdot \Delta\eta' \cdot J}$$

, wherein $N$ is the number of the transmitted chirp signals, $f_m$ is a carrier frequency of a sub-band $m$, $\Delta\eta'$ is a pixel interval of an original signal, and $J$ is a number of azimuth output pixel intervals; the azimuth pixel interval after the SCFT is:

$$\Delta\eta_c'' = \frac{cR_s \cdot N}{f_c 2v_s^2 \cdot \Delta\eta' \cdot J}.$$

**6.** The method according to claim 1, wherein the step of performing (S2) range sub-band synthesis comprises steps of:

performing range matched filtering on azimuth preprocessed sub-band signals to obtain a group of range-compressed sub-band signals;
zero-padding the group of range-compressed sub-band signals in a range-frequency domain to obtain a group of upsampled sub-band signals;
performing, in range, Inverse Fast Fourier Transform, IFFT, on the group of upsampled sub-band signals to obtain signals in a range time domain; and
performing frequency shift and superimposing on the group of sub-band signals in the range time domain to obtain a synthesized wideband signal.

**Patentansprüche**

**1.** Verfahren zur Implementierung eines satellitengetragenen Radarsystems mit synthetischer Apertur, SAR, einer hohen Auflösung und eines breiten Swath (Schwad bzw. Streifen), wobei das Verfahren die folgenden Schritte umfasst:

im Azimut eines satellitengetragenen SAR Annehmen (S1) einer Vielfach-Eingabe-Vielfach-Ausgabe (Multiple-Input, Multiple-Output), MIMO, im gleitenden Spotlight-Modus, um durch N-Unteraperturen N Chirpsignale von verschiedenen Trägerfrequenzen derart zu senden, dass die Teilbandechos, die von den mehrfachen Unteraperturen empfangen werden, getrennt werden; und Vorverarbeiten im Azimut die getrennten Teilbandechos, um das zurückgefaltete Dopplerspektrum, das durch Strahlsteuerung und eine Vielfachkanalstruktur einer Antenne verursacht wird, aufzulösen;
Durchführen (S2) der Synthese eines Entfernungsteilbands auf den im Azimut vorverarbeiteten Signalen, um ein synthetisiertes Signal mit einer Bandbreite des N-fachen einer Bandbreite eines einzelnen gesendeten Chirpsignals zu erhalten; und
Durchführen (S3) der verbleibenden Fokussierung des synthetisierten Signals unter Verwendung eines Entfernungs-Migrations-Algorithmus, RMA, um eine abschließende Radarabbildung mit einer hohen Auflösung zu erhalten,
wobei der Schritt des Durchführens (S3) der verbleibenden Fokussierung des synthetisierten Signals unter Verwendung eines RMA die folgenden Schritte umfasst:

Übertragen eines synthetisierten Breitbandsignals an einen zweidimensionalen Frequenzbereich;
in dem zweidimensionalen Frequenzbereich Multiplizieren des synthetisierten Breitbandsignals mit einer Referenzfunktion, um ein annäherungsweise fokussiertes Radarsignal zu erhalten; und
Durchführen einer STOLT-Abbildung auf das annäherungsweise fokussierte Radarsignal, um die abschließende Radarabbildung zu erhalten,

**dadurch gekennzeichnet, dass** die Referenzfunktion $H_{RFM}(f_\tau,f_\eta)$ in dem RMA ausgedrückt ist wie folgt:

$$H_{RFM}\left(f_\tau, f_\eta\right) = \exp\left(j\frac{4\pi R_{ref}\left(f_c+f_\tau\right)}{c}\sqrt{1-\frac{c^2 f_\eta^{\,2}}{4v_s^2\left(f_c+f_\tau\right)^2}}\right)\cdot\exp\left\{\frac{j\pi R_s f_\eta^2 c}{2v_s^2\left(f_c+f_\tau\right)}\right\},$$

wobei $f_\tau$ eine Entfernungsfrequenz ist, $f_\eta$ eine Azimutfrequenz ist, $R_{ref}$ die naheste Schrägentfernung bzw. nächste radiale Ausrichtung (slant range) zwischen dem Mittelpunkt der Abbildungsszene und der Antenne ist, $f_c$ eine zentrale Trägerfrequenz ist, $c$ die Lichtgeschwindigkeit ist, $v_s$ eine Geschwindigkeit einer Plattform ist, $j$ eine imaginäre Einheit ist, $\pi$ ein Verhältnis von Kreisumfang zu Kreisdurchmesser ist, $R_s$ die naheste Schrägentfernung zwischen der Antenne und einem Mittelpunkt der Umdrehung ist, und der zweite Exponentialterm dient dazu, eine zusätzliche Phase, die durch eine Azimutmengenkompression, die nicht in einer Referenzfunktion in dem Streifenabbildungsmodus enthalten ist, eingeführt worden ist, zu kompensieren.

**2.** Verfahren nach Anspruch 1, wobei ein Frequenzschritt zwischen den Chirpsignalen verschiedener Trägerfrequenzen einer Bandbreite eines Teilbands derart gleicht, dass die Teilbandechos, die von den mehrfachen Unteraperturen empfangen werden, getrennt werden.

**3.** Verfahren nach Anspruch 1, wobei der Schritt des Vorverarbeitens (S1) der getrennten Teilbandechos im Azimut die folgenden Schritte umfasst:

Durchführen einer schnellen Fourietransformation, FFT, auf den getrennten Teilbandechos, um Daten in dem Entfernungsfrequenzbereich und in dem Azimut-Zeitbereich zu erhalten;
Erniedrigen, Zusammendrücken und Entrümpeln der erhaltenen Echodaten in dem Entfernungsfrequenzbereich und in dem Azimut-Zeitbereich mit einer Deramping-Funktion, um das spektrale Zurückfalten, das durch die Strahlsteuerung eingeführt worden ist, zu entfernen, um entrümpelte Radardaten zu erhalten;
Übertragen der entrümpelten Radardaten an einen zweidimensionalen Frequenzbereich über eine FFT;
Rekonstruieren der abgetasteten Daten jedes Teilbands von den N-Unteraperturen über einen Algorithmus einer Vielfachkanalrekonstruktion, um gleichmäßige Abtastdaten des Azimuts zu erhalten;
Multiplizieren der rekonstruierten, gleichmäßigen Abtastdaten des Azimuts mit einer Kompensationsfunktion einer Residualphase, um eine Azimutmengenkompression zu erreichen; und
Durchführen einer Skalierenden Fourietransformation, SCFT, des Azimuts auf den Daten nach der Azimutmengenkompression, um ein Azimut-Pixelintervall $\Delta\eta''$ auf ein festes Intervall $\Delta\eta''_c$ anzupassen.

**4.** Verfahren nach Anspruch 3, wobei die Deramping-Funktion $h_{mn}(i\Delta\eta', f_\tau)$, die einem Teilband n, das von einer Unterapertur m empfangen worden ist, entspricht, ausgedrückt ist als:

$$h_{m,n}\left(i\Delta\eta', f_\tau\right) = \exp\left\{\frac{j2\pi\left(f_m+f_\tau\right)v_s^2\left(i\Delta\eta' - \frac{\Delta x_{m,n}}{v_s}\right)^2}{cR_s}\right\}$$

wobei i = -1/2, -I/2 + 1, ..., I/2 - 1, wobei $I$ eine Anzahl von Azimuteingabepixeln ist, $\Delta\eta'$ ein Pixelintervall eines Originalsignals ist, $j$ eine imaginäre Einheit ist, $f_m$ eine Trägerfrequenz eines Teilbands $m$ ist, und

$$\Delta x_{m,n} = \frac{(m+n-N-1)l_{az}}{2}$$

ein Abstand zwischen einem äquivalenten Phasenzentrum und einem Zentrum der Antenne ist.

**5.** Verfahren nach Anspruch 3, wobei nach der Azimutmengenkompression das Azimut-Pixelintervall $\Delta\eta''$ ausgedrückt ist als:

$$\Delta\eta'' = \frac{cR_s \cdot N}{(f_m + f_\tau)2v_s^2 \cdot \Delta\eta' \cdot J}$$

, wobei $N$ die Anzahl der gesendeten Chirpsignale ist, $f_m$ eine Trägerfrequenz eines Teilbands m ist, $\Delta\eta'$ ein Pixelintervall eines Originalsignals ist, und $J$ eine Anzahl von Azimutausgabepixeln ist; nach der SCFT ist das Azimutpixelintervall:

$$\Delta\eta_c'' = \frac{cR_s \cdot N}{f_c 2v_s^2 \cdot \Delta\eta' \cdot J}.$$

**6.** Verfahren nach Anspruch 1, wobei der Schritt des Durchführens (S2) der Synthese eines Entfernungsteilbands die folgenden Schritte umfasst:

Durchführen eines mit der Entfernung abgestimmten Filterns auf den im Azimut vorverarbeiteten Teilbandsignalen, um eine Gruppe von entfernungskomprimierten Teilbandsignalen zu erhalten;
Auffüllen der Gruppe von entfernungskomprimierten Teilbandsignalen in einem Entfernungsfrequenzbereich mit Nullen (Zero Padding), um eine Gruppe aufwärts abgetasteter Teilbandsignale zu erhalten;
Durchführen einer inversen schnellen Fourietransformation, IFFT, in der Entfernung auf die Gruppe von aufwärts abgetasteten Teilbandsignalen, um Signale in einem Entfernungs-Zeitbereich zu erhalten; und
Durchführen einer Frequenzverschiebung und Überlagerung auf die Gruppe von Teilbandsignalen in dem Entfernungs-Zeitbereich, um ein synthetisiertes Breitbandsignal zu erhalten.

## Revendications

**1.** Procédé d'implémentation d'un système de radar à ouverture synthétique, SAR, spatioporté à large fauchée, comprenant les étapes consistant à :

adopter (S1), dans l'azimut d'un SAR spatioporté, un mode spotlight glissant multi entrées multi sorties, MIM, pour transmettre, par N sous-ouvertures, N signaux de chirp (pépiement) de différentes fréquences porteuses, de sorte que les échos de sous-bande reçus par les sous-ouvertures multiples soient séparés ; et prétraiter, en azimut, les échos de sous-bande séparés afin de résoudre le spectre Doppler à rebours causé par l'orientation de faisceau et une structure multi-canaux d'une antenne ;
effectuer (S2) une synthèse de sous-bande de distance sur les signaux azimut prétraités afin d'obtenir un signal synthétisé avec une largeur de bande de N fois une largeur de bande d'un signal de chirp unique transmis ; et effectuer (S3), en utilisant un algorithme de migration distance, RMA, une focalisation résiduelle du signal synthétisé comprend les étapes consistant à :

dans lequel l'étape d'exécution (S3) d'une focalisation résiduelle, en utilisant un RMA, du signal synthétisé comprend les étapes consistant à :

transformer un signal large bande synthétisé en un domaine de fréquence bidimensionnel ;
multiplier, dans le domaine de fréquence bidimensionnel, le signal large bande synthétisé par une fonction de référence afin d'obtenir un signal de radar approximativement focalisé ; et
effectuer un mappage STOLT sur le signal de radar approximativement focalisé afin d'obtenir l'image de radar finale,

**caractérisé en ce que** la fonction de référence $H_{RFM}(f_\tau,f_\eta)$ dans le RMA est exprimée comme :

$$H_{RFM}\left(f_\tau,f_\eta\right)=\exp\left(j\frac{4\pi R_{ref}\left(f_c+f_\tau\right)}{c}\sqrt{1-\frac{c^2 f_\eta^{\ 2}}{4v_s^2\left(f_c+f_\tau\right)^2}}\right)\cdot\exp\left\{\frac{j\pi R_s f_\eta^2 c}{2v_s^2\left(f_c+f_\tau\right)}\right\},$$

dans laquelle $f_\Gamma$ est une fréquence de portée, $f_\eta$ est une fréquence azimut, $R_{ref}$ est une distance oblique entre le centre de la scène d'imagerie et l'antenne, $f_c$ est une fréquence porteuse centrale, c est la vitesse de la lumière, vs est une vitesse d'une plate-forme, j est une unité imaginaire, $\Pi$ est un rapport de la circonférence d'un cercle sur son diamètre, $R_s$ est une distance oblique la plus proche entre l'antenne et un centre de rotation, et le second terme exponentiel sert à compenser une phase additionnelle introduite par une compression isotrope azimut, qui n'est pas incluse dans une fonction de référence dans le mode carte-bande.

**2.** Procédé selon la revendication 1, dans lequel un pas de fréquence entre les signaux de chirp de différentes fréquences porteuses équivaut à une bande passante de sous-bande, de sorte que les échos de sous-bande reçus par les sous-ouvertures multiples soient séparés.

**3.** Procédé selon la revendication 1, dans lequel l'étape de prétraitement (S1), en azimut, des échos de sous-bande séparés comprend les étapes consistant à :

effectuer une transformée de Fourier rapide, FFT, sur les échos de sous-bande séparés pour obtenir des données d'écho dans un domaine temporel azimut et de fréquence de portée ;
effectuer un deramping des données d'écho obtenues dans le domaine temporel azimut et de fréquence de portée avec une fonction de deramping pour supprimer le rebours spectral introduit par l'orientation de faisceau afin d'obtenir des données de radar ayant subi un deramping ;
transformer les données de radar ayant subi un deramping en un domaine de fréquence bidimensionnel via FFT ;
reconstruire les données d'échantillonnage de chaque sous-bande provenant des N sous-ouvertures via un algorithme de reconstruction multi-canaux afin d'obtenir des données d'échantillonnage azimut uniformes ;
multiplier les données d'échantillonnage azimut uniformes reconstruites par une fonction de compensation de phase résiduelle afin d'accomplir une compression isotrope azimut ; et
effectuer une transformée de Fournier à changement d'échelle azimut, SCFT, sur les données après la compression isotrope azimut afin d'ajuster un intervalle de pixel azimut $\Delta\eta''$ sur un intervalle fixe $\Delta\eta''_c$.

**4.** Procédé selon la revendication 3, dans lequel la fonction de deramping $h_{mn}(i\Delta\eta',f_\tau)$ correspondant à une sous-bande n reçue par une sous-ouverture m est exprimée comme :

$$h_{m,n}\left(i\Delta\eta',f_\tau\right)=\exp\left\{\frac{j2\pi\left(f_m+f_\tau\right)v_s^2\left(i\Delta\eta'-\frac{\Delta x_{m,n}}{v_s}\right)^2}{cR_s}\right\}$$

dans lequel i = -1/2, -I/2 + 1, ..., 1/2 - 1, I étant un nombre de pixels d'entrée azimut, $\Delta\eta'$ est un intervalle de pixels d'un signal d'origine, j est une unité imaginaire, $f_m$ est une fréquence porteuse d'une sous-bande m et

$$\Delta x_{m,n} = \frac{(m+n-N-1)l_{az}}{2};$$

est une distance entre un centre de phase équivalent et un centre de l'antenne.

**5.** Procédé selon la revendication 3, dans lequel l'intervalle de pixel azimut $\Delta\eta''$ après une compression isotrope azimut est exprimé comme :

$$\Delta\eta'' = \frac{cR_s \cdot N}{(f_m + f_\tau)2v_s^2 \cdot \Delta\eta' \cdot J}$$

dans laquelle N est le nombre de signaux de chirp transmis, $f_m$ est une fréquence porteuse d'une sous-bande m, $\Delta\eta'$ est un intervalle de pixel d'un signal d'origine et J es un nombre d'intervalles de pixels de sortie azimut ; l'intervalle de pixel azimut après le SCFT est :

$$\Delta\eta_c'' = \frac{cR_s \cdot N}{f_c 2v_s^2 \cdot \Delta\eta' \cdot J}.$$

**6.** Procédé selon la revendication 1, dans lequel l'étape d'exécution (S2) d'une synthèse de sous-bande de distance comprend les étapes consistant à :

effectuer un filtrage accordé en distance sur les signaux de sous-bande azimut prétraités afin d'obtenir un groupe de signaux de sous-bande à distance compressée ;
ajouter des zéros au groupe de signaux de sous-bande à distance compressée dans un domaine de fréquence de portée afin d'obtenir un groupe de signaux de sous-bande suréchantillonnés ;
effectuer, dans la portée, une transformée de Fourier inverse rapide, IFFT, sur le groupe de signaux de sous-bande suréchantillonnés afin d'obtenir un domaine temporel ; et
effectuer un déplacement de fréquence et superposer sur le groupe de signaux de sous-bande dans le domaine temporel afin d'obtenir un signal large bande synthétisé.

Fig. 1

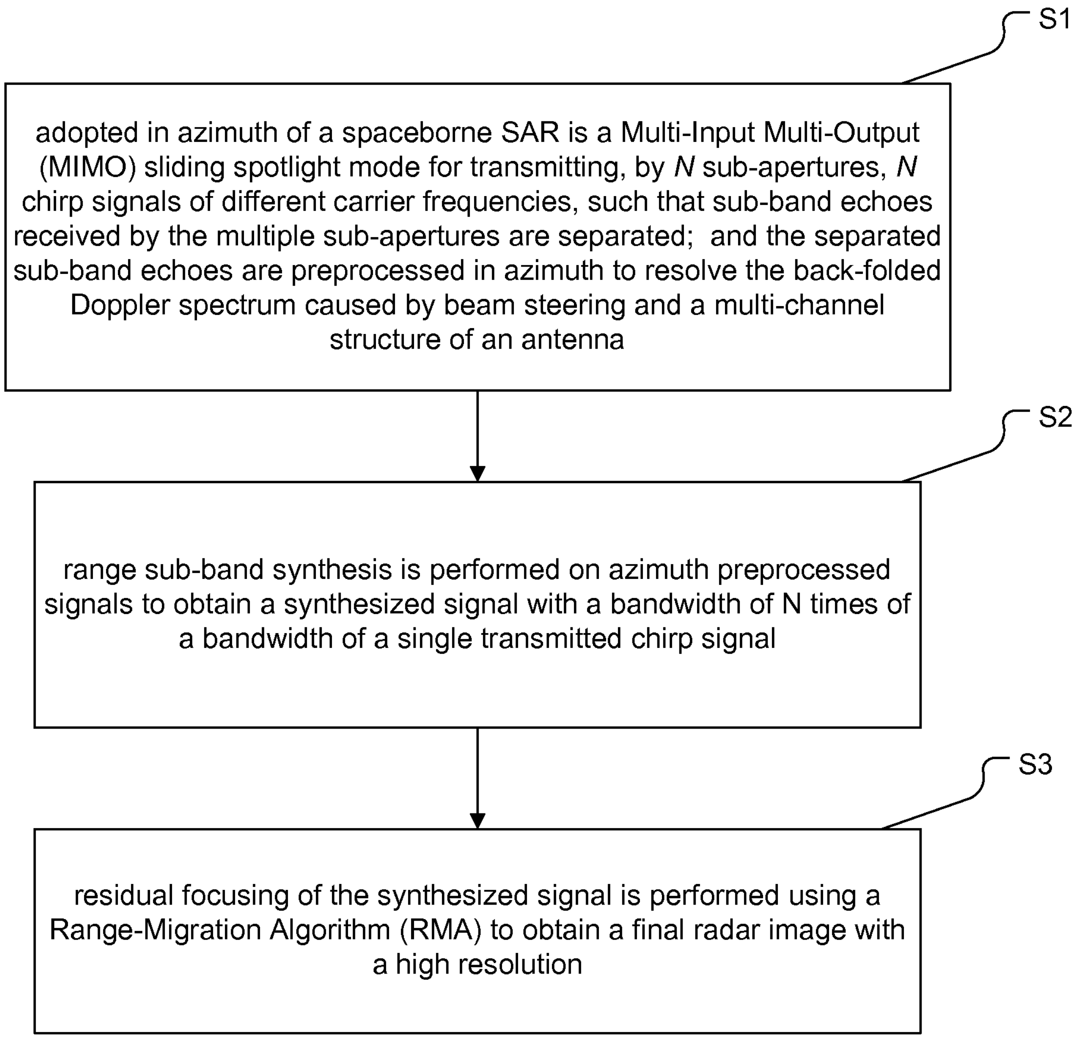
S1
adopted in azimuth of a spaceborne SAR is a Multi-Input Multi-Output (MIMO) sliding spotlight mode for transmitting, by *N* sub-apertures, *N* chirp signals of different carrier frequencies, such that sub-band echoes received by the multiple sub-apertures are separated; and the separated sub-band echoes are preprocessed in azimuth to resolve the back-folded Doppler spectrum caused by beam steering and a multi-channel structure of an antenna
S2
range sub-band synthesis is performed on azimuth preprocessed signals to obtain a synthesized signal with a bandwidth of N times of a bandwidth of a single transmitted chirp signal
S3
residual focusing of the synthesized signal is performed using a Range-Migration Algorithm (RMA) to obtain a final radar image with a high resolution

Fig. 2a

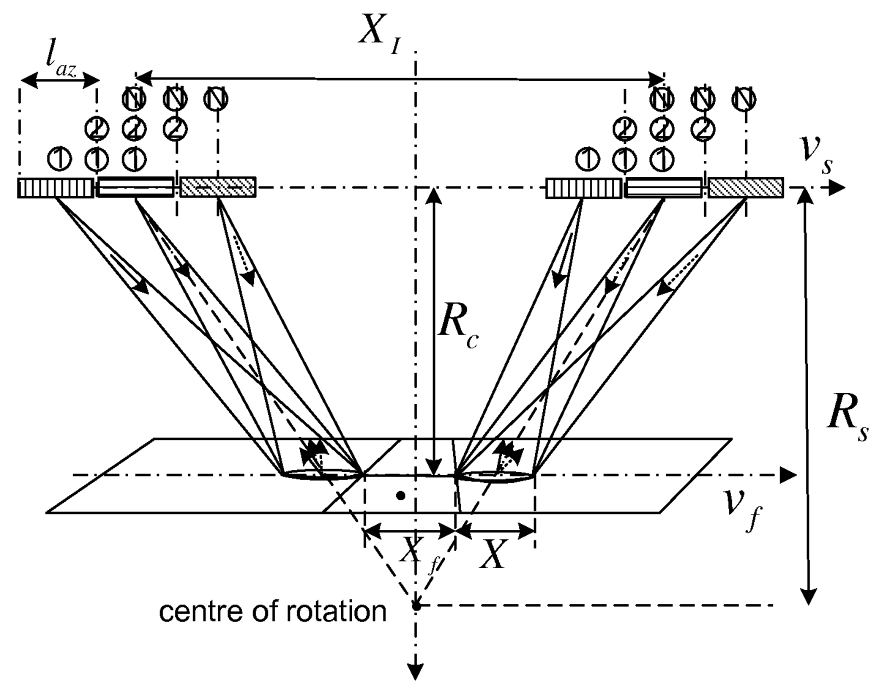
$X_I$
$l_{az}$
$v_s$
$R_c$
$R_s$
$v_f$
$X_f$
$X$
centre of rotation

Fig. 2b

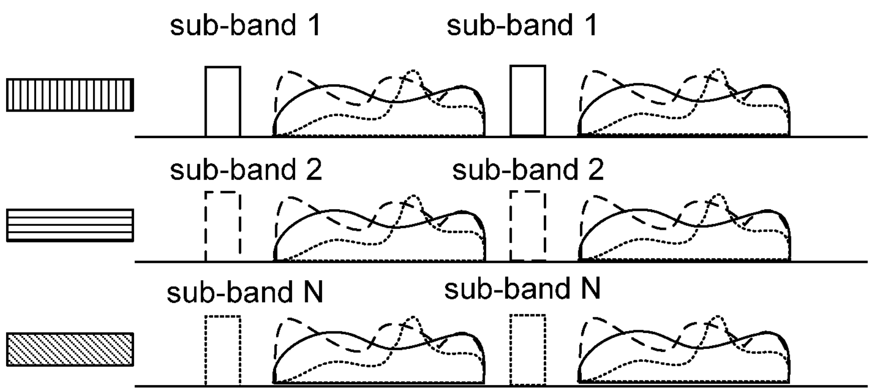
sub-band 1
sub-band 1
sub-band 2
sub-band 2
sub-band N
sub-band N

Fig. 3

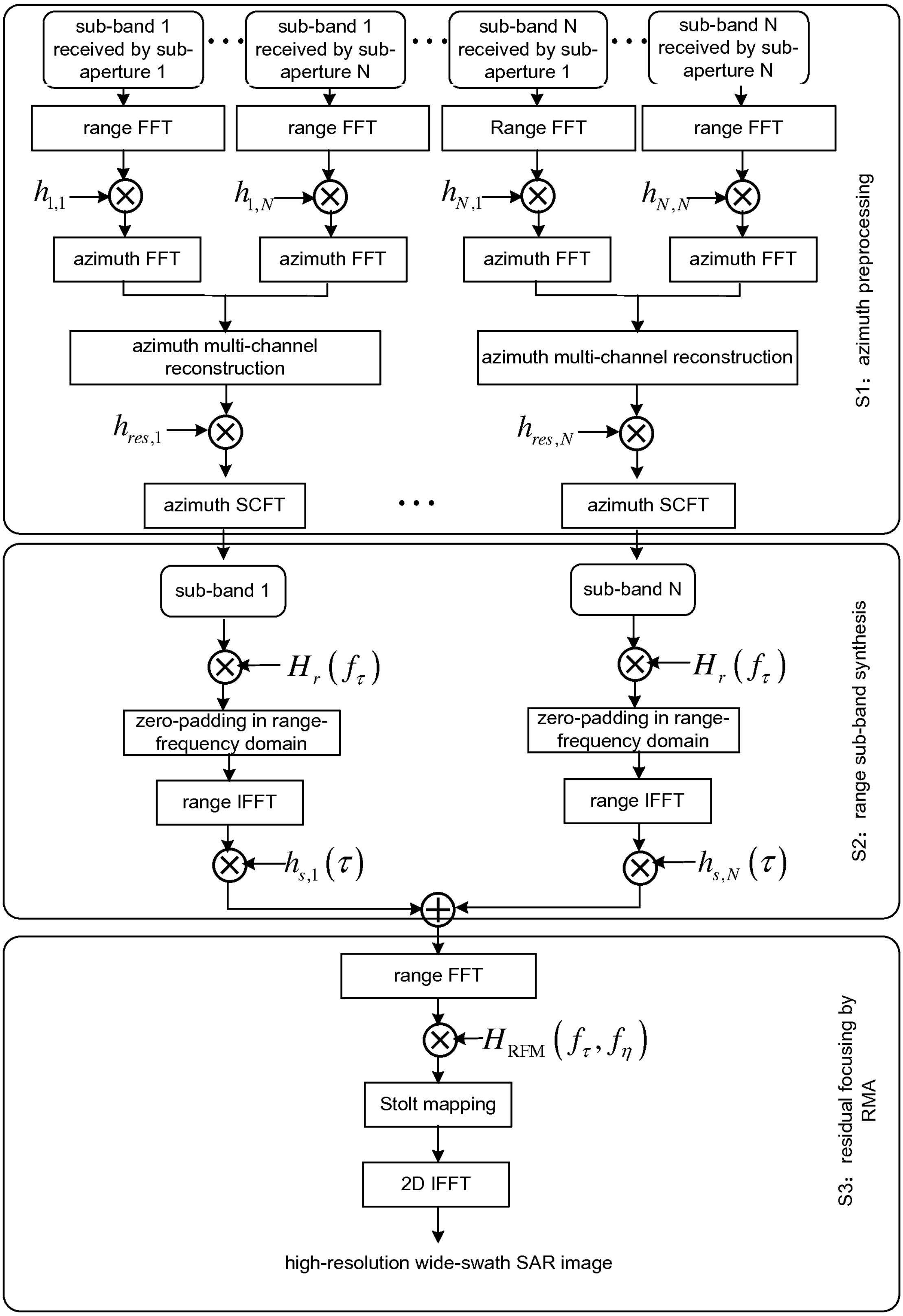
sub-band 1 received by sub-aperture 1
sub-band 1 received by sub-aperture N
sub-band N received by sub-aperture 1
sub-band N received by sub-aperture N
range FFT
range FFT
Range FFT
range FFT
$h_{1,1}$
$h_{1,N}$
$h_{N,1}$
$h_{N,N}$
azimuth FFT
azimuth FFT
azimuth FFT
azimuth FFT
azimuth multi-channel reconstruction
azimuth multi-channel reconstruction
$h_{res,1}$
$h_{res,N}$
azimuth SCFT
azimuth SCFT
S1: azimuth preprocessing
sub-band 1
sub-band N
$H_r(f_\tau)$
$H_r(f_\tau)$
zero-padding in range-frequency domain
zero-padding in range-frequency domain
range IFFT
range IFFT
$h_{s,1}(\tau)$
$h_{s,N}(\tau)$
S2: range sub-band synthesis
range FFT
$H_{RFM}(f_\tau, f_\eta)$
Stolt mapping
2D IFFT
high-resolution wide-swath SAR image
S3: residual focusing by RMA

Fig. 4

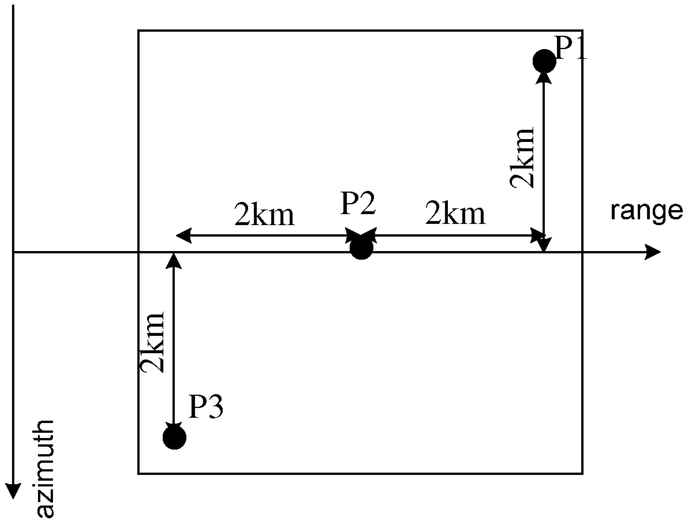
P1
2km
P2
2km
2km
range
2km
P3
azimuth

Fig. 5

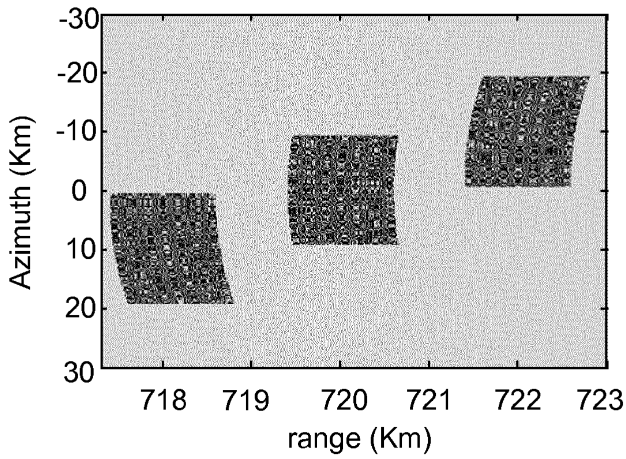
-30
-20
-10
0
10
20
30
Azimuth (Km)
718
719
720
721
722
723
range (Km)

Fig. 6

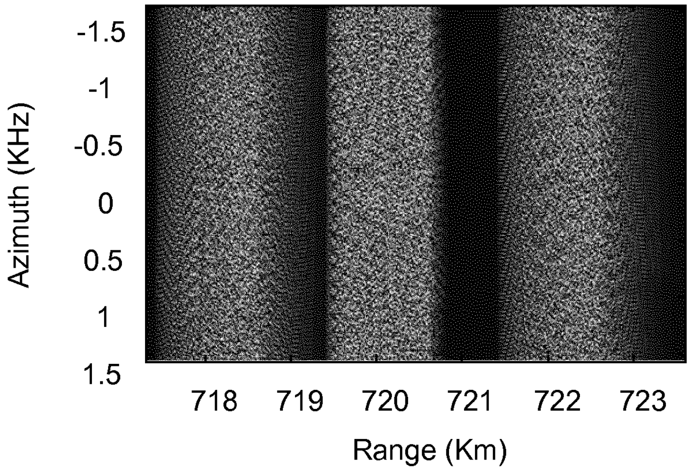
-1.5
-1
-0.5
0
0.5
1
1.5
Azimuth (KHz)
718
719
720
721
722
723
Range (Km)

Fig. 7

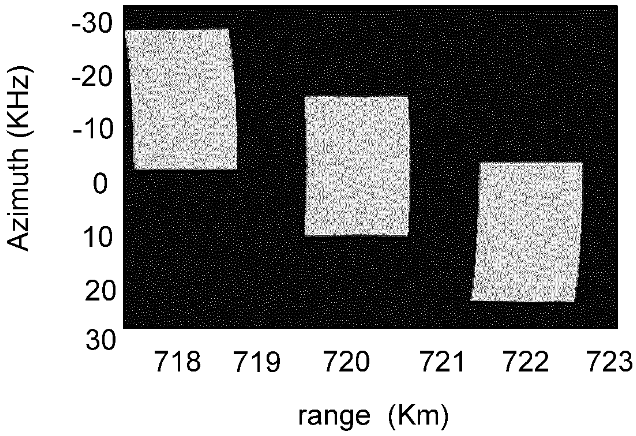
-30
-20
-10
0
10
20
30
Azimuth (KHz)
718
719
720
721
722
723
range (Km)

Fig. 8a

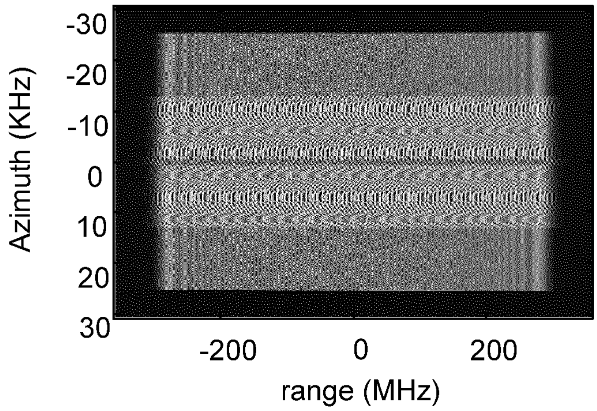


Fig. 8b

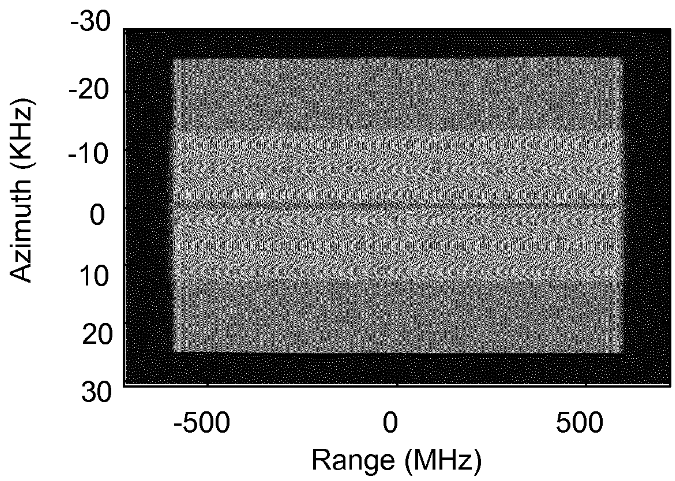


Fig. 9a

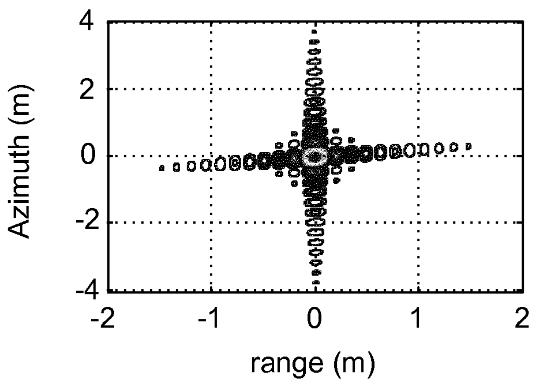

Fig. 9b

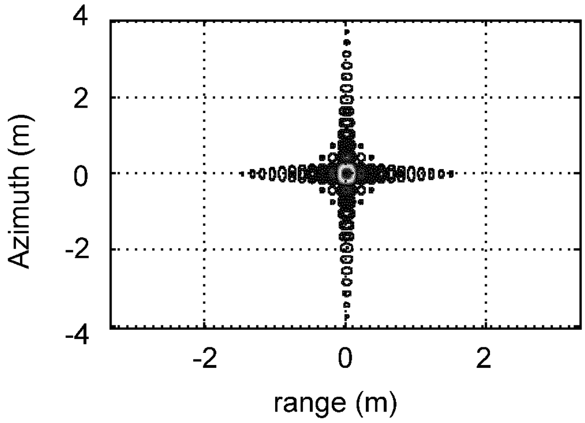


Fig. 9c

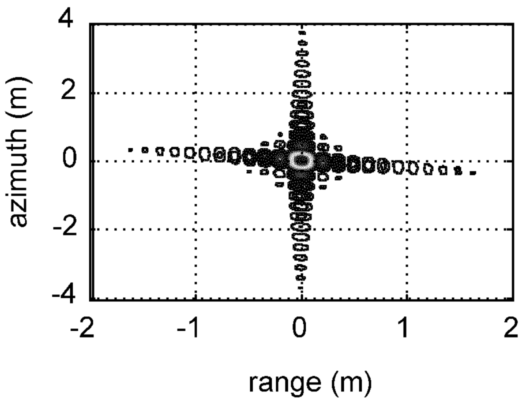

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **GERHARD KRIEGER et al.** Multidimensional Waveform Encoding: A New Digital Beamforming Technique for Synthetic Aperture Radar Remote Sensing. *IEEE Transactions on Geoscience and Remote Sensing,* 01 January 2008, vol. 46 (1), ISSN 0196-2892, 31-46
- **WEI XU et al.** Multichannel synthetic aperture radar systems with a planar antenna for future spaceborne microwave remote sensing. *IEEE Aerospace and Electronic Systems Magazine,* 01 December 2012, vol. 27 (12), ISSN 0885-8985, 26-30
- **GERHARD KRIEGER.** MIMO-SAR: Opportunities and Pitfalls. *IEEE Transactions on Geoscience and Remote Sensing,* 28 June 2013, vol. 52 (5), ISSN 0196-2892, 2628-2645
- **WEI XU et al.** MULTI-CHANNEL SPCMB-TOPS SAR FOR HIGH-RESOLUTION WIDE-SWATH IMAGING. *Progress in Electromagnetic Research,* 30 May 2011, vol. 116, ISSN 1070-4698, 533-551
- **YAN LIU et al.** Echo Model Analyses and Imaging Algorithm for High-Resolution SAR on High-Speed Platform. *IEEE Transactions on Geoscience and Remote Sensing,* 01 March 2012, vol. 50 (3), ISSN 0196-2892, 933-950